# EUROPÄISCHE PATENTANMELDUNG

(11) **EP 4 574 387 A2**
(43) Veröffentlichungstag der Anmeldung: **25.06.2025**
(21) Anmeldenummer: 25174707.7
(22) Anmeldetag: 18.04.2024
(51) Int. Cl.: B29C 43/58

(54) **WALZANORDNUNG**

(30) Priorität: 20.04.2023 DE 102023110088
(62) Teilanmeldung aus: 24171121.7
(71) Anmelder: Carl Freudenberg KG, 69469 Weinheim (DE)
(72) Erfinder: Semrau, Marek, 15741 Bestensee (DE)

(57) **Zusammenfassung**

Walzanordnung (1), umfassend zumindest ein Walzenpaar (2) mit zwei zusammenwirkenden Walzen (3, 4) und eine Sicherheitseinrichtung (5), wobei die Sicherheitseinrichtung (5) einen Hydrospeicher (6) und eine Messeinrichtung (7) aufweist, wobei der Hydrospeicher (6) einen Speicher mit einem ersten Speicherraum (8) und einem zweiten Speicherraum (9) aufweist, wobei in dem ersten Speicherraum (8) eine hydraulische Flüssigkeit angeordnet ist, wobei in dem zweiten Speicherraum (9) ein komprimierbares Gas angeordnet ist, wobei der Hydrospeicher (6) ein beweglich angeordnetes Trennglied (10) aufweist, das den ersten Speicherraum (8) von dem zweiten Speicherraum (9) mediendicht trennt, wobei das Walzenpaar (2) eine Arbeitsposition und eine Sicherheitsposition aufweist, wobei der radiale Abstand (A) zwischen den Walzen (3, 4) in der Sicherheitsposition größer ist als in der Arbeitsposition, wobei der Hydrospeicher (6) eingerichtet ist, auf das Walzenpaar (2) einzuwirken, um das Walzenpaar (2) von der Arbeitsposition in die Sicherheitsposition zu bewegen und wobei die Messeinrichtung (7) dazu eingerichtet ist, kontinuierlich eine Position des Trenngliedes (10) innerhalb des Hydrospeichers (6) zu erfassen.

## Beschreibung

Die Erfindung betrifft eine Walzanordnung, umfassend zumindest ein Walzenpaar mit zwei zusammenwirkenden Walzen und eine Sicherheitseinrichtung, wobei die Sicherheitseinrichtung einen Hydrospeicher und eine Messeinrichtung aufweist.

### Technisches Gebiet

Derartige Walzanordnungen sind allgemein bekannt. Ein Walzenpaar der Walzanordnung umfasst dabei zumindest zwei zusammenwirkende Walzen, welche rotierbar gelagert sind, um Rohmaterial, beispielsweise elastomeres Material wie Rohkautschuk zu verarbeiten. Der Abstand zwischen den Walzen wird über Hydraulikzylinder eingestellt und kann durch Verstellen des Kolbenhubs der Hydraulikzylinder vergrößert oder verkleinert werden. Zum Verstellen des Hydraulikzylinders wird auf einer Seite des Hydraulikzylinders Hydraulikflüssigkeit eingefüllt und auf der anderen Seite entnommen. Das Fördern der Hydraulikflüssigkeit erfolgt über eine Pumpe, wobei das Fördervolumen der Pumpe aus Kostengründen begrenzt ist. Dementsprechend ist allerdings auch die Geschwindigkeit, mit der über das Fördern von Hydraulikflüssigkeit durch die Pumpe der Abstand zwischen den Walzen eingestellt werden kann, auf kleine Geschwindigkeiten begrenzt. Bei einer Abschaltung, beispielsweise für Wartungszwecke oder bei einem Ausfall ist es aus Sicherheitsgründen erforderlich, den Abstand der Walzen zu vergrößern. Insbesondere im Falle einer Betriebsunterbrechung durch einen Not-Aus muss gewährleistet sein, dass die zusammenwirkenden Walzen innerhalb eines vorgegebenen Zeitraums auf einen vorgegebenen Mindestabstand eingestellt werden. Zumeist sollte der Abstand der Walzen innerhalb von 5 Sekunden mindestens 50 Millimeter erreichen. Dadurch verbessert sich die Arbeitssicherheit.

Um höhere Verstellgeschwindigkeiten - insbesondere zum Vergrößern des Abstandes zwischen den Walzen im Falle eines Not-Aus - zu erreichen, ist es bekannt, in dem Hydrauliksystem einen Hydrospeicher anzuordnen. Im Falle eines Not-Aus kann innerhalb kurzer Zeit Hydraulikflüssigkeit aus dem Hydrospeicher in das Hydrauliksystem und damit zu den Hydraulikzylindern geführt werden, um den Abstand zwischen den Walzen in kurzer Zeit zu vergrößern.

### Stand der Technik

Aus der DE 10 2020 214 621 A1 ist Walzwerk mit einer hydraulischen Achse bekannt. Die hydraulische Achse hat zumindest einen Hydraulikzylinder, um einen Abstand von zwei Walzen des Walzwerks zueinander einzustellen. Der Hydraulikzylinder kann mittels eines Drucksensors zur Sicherheit drucküberwacht sein. Zur Druckmittelversorgung des Hydraulikzylinders ist eine Hydromaschine vorgesehen.

### Darstellung der Erfindung

Der Erfindung liegt die Aufgabe zugrunde eine Walzanordnung bereitzustellen, welche eine verbesserte Betriebssicherheit ermöglicht.

Die Aufgabe wird mit den Merkmalen von Anspruch 1 gelöst. Auf vorteilhafte Ausgestaltungen nehmen die Unteransprüche Bezug.

Die erfindungsgemäße Walzanordnung umfasst zumindest ein Walzenpaar mit zwei zusammenwirkenden Walzen und eine Sicherheitseinrichtung, wobei die Sicherheitseinrichtung einen Hydrospeicher und eine Messeinrichtung aufweist, wobei der Hydrospeicher einen Speicher mit einem ersten Speicherraum und einem zweiten Speicherraum aufweist, wobei in dem ersten Speicherraum eine hydraulische Flüssigkeit angeordnet ist, wobei in dem zweiten Speicherraum ein komprimierbares Gas angeordnet ist, wobei der Hydrospeicher ein beweglich angeordnetes Trennglied aufweist, das den ersten von dem zweiten Speicherraum mediendicht trennt, wobei das Walzenpaar eine Arbeitsposition und eine Sicherheitsposition aufweist, wobei der radiale Abstand zwischen den Walzen in der Sicherheitsposition größer ist als in der Arbeitsposition, wobei der Hydrospeicher eingerichtet ist, auf das Walzenpaar einzuwirken, um das Walzenpaar von der Arbeitsposition in die Sicherheitsposition zu bewegen, wobei die Messeinrichtung dazu eingerichtet ist, kontinuierlich eine Position des Trenngliedes innerhalb des Hydrospeichers zu erfassen.

Durch Einbringen von Hydraulikflüssigkeit in den Speicher kann Energie in den Hydrospeicher übertragen werden. Dazu wird Hydraulikflüssigkeit in den ersten Speicherraum eingebracht, so dass sich das beweglich angeordnete Trennglied bewegt und das Volumen des zweiten Speicherraums verringert wird. Dabei wird das komprimierbare Gas in dem zweiten Speicherraum komprimiert. Die durch das Einbringen von Hydraulikflüssigkeit verrichtete mechanische Arbeit beim Bewegen des Trenngliedes wird in dem komprimierten Gas gespeichert. Derartig gespeicherte Energie ist im Idealfall unbegrenzt gespeichert und kann bei Bedarf unmittelbar abgerufen werden. Durch das Entspannen des komprimierten Gases kann die in dem komprimierten Gas gespeicherte Energie in mechanische Energie umgewandelt werden, um das Walzenpaar zu bewegen, insbesondere von der Arbeitsposition in die Sicherheitsposition. Dies kann insbesondere durch Hydraulikzylinder realisiert werden, der mit dem Hydrospeicher fluidisch verbindbar ist.

Bevorzugt liegt der Abstand der Walzen in der Arbeitsposition in einem Bereich zwischen 1 mm und 20 mm, insbesondere in einem Bereich zwischen 1,5 mm und 12 mm. Vorzugweise liegt der Abstand der Walzen in der Sicherheitsposition bei mindestens 50 mm. Als Antrieb kann ein hydraulischer Antrieb verwendet werden. Dabei können beide Walzen des Walzenpaares bewegbar angeordnet sein. Denkbar ist auch, dass lediglich eine Walze (Stellwalze) bewegbar angeordnet ist und die andere Walze (Festwalze) rotierbar in der Anordnung fixiert und dementsprechend nicht radial bewegbar angeordnet ist.

Um die Bewegung von der Arbeitsposition in die Sicherheitsposition im Falle eines Not-Aus permanent gewährleisten zu können, muss die Funktionsfähigkeit des Hydrospeichers kontinuierlich überwacht werden. Dabei muss kontinuierlich und unterbrechungsfrei sichergestellt werden, dass die Energie, die in dem komprimierten Gas gespeichert ist, ausreicht, um die Bewegung in die Sicherheitsposition ausführen zu können. Dabei muss die Sicherheitsposition in einem bestimmten Zeitraum erreicht werden. Bevorzugt beträgt der Zeitraum weniger als 5 Sekunden. Durch kontinuierliche Ermittlung der Position des Trennglieds kann der Druck im zweiten Speicherraum kontinuierlich erfasst werden, wodurch die zur Verfügung stehende Energie kontinuierlich ermittelt werden kann.

Wird eine unerwünschte Position des Trenngliedes ermittelt, beispielsweise aufgrund einer Leckage im zweiten Speicherraum, kann der Hydrospeicher unmittelbar durch Auffüllen mit komprimierbarem Gas wieder in einen Sollzustand gebracht werden, in welchem das Trennglied eine Sollposition einnimmt. Insbesondere ist vorteilhaft, dass mit Hilfe der kontinuierlichen Positionsbestimmung des Trenngliedes der Druck des komprimierbaren Gases in dem zweiten Speicherraum stets erfasst werden kann. Es ist zum Nachweis der Funktionsfähigkeit des Hydrospeichers insbesondere nicht notwendig, den ersten Speicherraum durch ein Verfahren des Trenngliedes zunächst komplett zu entleeren, um anschließend den Druck im zweiten Speicherraum zu erfassen. Dementsprechend ermöglicht die erfindungsgemäße Vorrichtung eine Reduktion der Zykluszeit und der zu fördernden Menge an Hydraulikflüssigkeit - und damit letztendlich der aufzuwendenden Energie zur Befüllung des Hydrospeichers. Darüber hinaus ist eine andauernde, kontinuierliche Überwachung des Hydrospeichers möglich.

Nach dem Auslösen eines Not-Aus kann Hydraulikflüssigkeit gleich wieder in den ersten Speicherraum eingebracht werden, um den Hydrospeicher zu regenerieren und die für einen weiteren Not-Aus erforderliche hydraulisch Energie bereitzustellen. Die Überwachung der Regeneration erfolgt dabei über die Detektion der Position des Trennglieds.

Das komprimierbare Gas kann insbesondere Stickstoff sein. Denkbar ist auch, dass andere Gase und/oder Gasgemische verwendet werden.

Der erste Speicherraum kann über ein erstes Steuerventil fluidisch mit einem Reservoir für Hydraulikflüssigkeit verbunden sein. Vorzugsweise kann aus dem Reservoir für Hydraulikflüssigkeit über eine Hydromaschine Hydraulikflüssigkeit in den ersten Speicherraum eingebracht werden. Insbesondere kann die Hydromaschine eine Hydropumpe oder ein Hydromotor sein. Die Hydromaschine dient der Versorgung des ersten Speicherraums mit hydraulischer Flüssigkeit.

Der zweite Speicherraum kann fluidisch über ein zweites Steuerventil mit einem Reservoir für komprimierbares Gas verbunden sein. Dadurch kann der zweite Speicherraum mit komprimierbarem Gas befüllt oder nachgefüllt werden, insbesondere bei Leckagen oder anderen Verlusten von komprimierbarem Gas.

Die Messeinrichtung kann als mechanisches Wegmesssystem eingerichtet sein. Denkbar ist auch, dass die Messeinrichtung als magnetisches, elektrisches oder optisches Wegmesssystem eingerichtet ist. Die Messeinrichtung kann insbesondere ein Seilzuggeber sein. Vorzugsweise ist die Messeinrichtung als berührungsloses Wegmesssystem eingerichtet.

Der Hydrospeicher kann als Kolbenspeicher ausgebildet sein, wobei das Trennglied als Kolben ausgebildet ist. Ein Kolbenspeicher ist zylindrisch ausgestaltet, wobei Länge und Durchmesser vorgegeben werden können. Dadurch kann ein Kolbenspeicher besonders gut in gegebene Bauräume eingepasst werden.

Der Hydrospeicher kann als Blasenspeicher ausgebildet sein, wobei das Trennglied als Blase ausgebildet ist. Vorzugsweise ist die Blase aus Kunststoff ausgebildet, insbesondere aus einem Elastomer. Bevorzugt ist ein Blasenspeicher kugelförmig ausgestaltet, wodurch ein gutes Verhältnis zwischen Raumbedarf und Leistung gegeben ist.

Der Hydrospeicher kann als Membranspeicher ausgebildet sein, wobei das Trennglied als Membran ausgebildet ist. Vorzugsweise ist ein Membranspeicher kugelförmig ausgestaltet, wodurch ein gutes Verhältnis zwischen Raumbedarf und Leistung gegeben ist.

Dem ersten Speicherraum kann ein Auslassventil zugeordnet sein, wobei das Auslassventil zwischen einer geöffneten und einer geschlossenen Position schaltbar ist. In geschlossener Position des Auslassventils ist der erste Speicherraum fluiddicht abgeschlossen. In geöffneter Position des Auslassventils kann die hydraulische Flüssigkeit durch das Auslassventil aus dem ersten Speicherraum strömen. Dabei kann der erste Speicherraum über das Auslassventil mit einer Bewegungsvorrichtung wirkverbunden sein, wobei die Bewegungsvorrichtung dazu eingerichtet ist auf das Walzenpaar einzuwirken, um zumindest eine der Walzen des Walzenpaares zu bewegen.

Die Walzanordnung kann als Walzanordnung für die Bearbeitung von elastomeren Werkstoffen ausgestaltet sein. Dabei kann die Walzanordnung insbesondere für die Bearbeitung von Rohgummi, Rohkautschuk, Gummi oder Gummimischungen ausgestaltet sein.

Bei dem Verfahren zur Überwachung der Funktionsfähigkeit einer Sicherheitseinrichtung einer beschriebenen Walzanordnung, wird das Trennglied durch Veränderung des Relativdrucks zwischen erstem und zweitem Speicherraum bewegt, wobei die Position des Trennglieds innerhalb des Hydrospeichers gemessen und mit einer vorgegebenen Referenzposition des Trennglieds verglichen wird, wobei aus einer Abweichung der gemessenen Position zu der vorgegebenen Referenzposition die Funktionsfähigkeit der Sicherheitseinrichtung feststellbar ist.

Dabei kann die Veränderung des Relativdrucks zwischen erstem und zweitem Speicherraum durch Einbringen von hydraulischer Flüssigkeit in den ersten Speicherraum erfolgen. Denkbar ist auch, dass hydraulische Flüssigkeit aus dem ersten Speicherraum abgelassen wird, um den Relativdruck zu ändern. Eine Abweichung der Position des Trenngliedes zur Referenzposition bedeutet, dass das Volumen des zweiten Speicherraums von dem Volumen abweicht, das der zweite Speicherraum einnimmt, wenn sich das Trennglied in der Referenzposition befindet. Dementsprechend weicht auch die in dem komprimierbaren Gas gespeicherte Energie ab im Vergleich zu der gespeicherten Energie in dem komprimierbaren Gas, wenn sich das Trennglied in der Referenzposition befindet.

Überschreitet die Abweichung zwischen der gemessenen Position und der vorgegebenen Referenzposition des Trennglieds einen vorgegebenen Grenzwert, reicht die in dem komprimierbaren Gas gespeicherte Energie nicht aus, um das Walzenpaar von der Arbeitsposition in die Sicherheitsposition zu bewegen. Die Funktionsfähigkeit der Sicherheitseinrichtung ist in diesem Fall nicht mehr gegeben. Um die Funktionsfähigkeit herbeizuführen, kann hydraulische Flüssigkeit in den ersten Speicherraum eingebracht werden, um mehr Energie in das komprimierbare Gas einzubringen. Dabei wird sich die Position des Trenngliedes ändern, so dass aus einem Vergleich zwischen der gemessenen Position und der vorgegebenen Referenzposition ermittelt werden kann, wann die Funktionsfähigkeit gegeben ist.

Die Referenzposition kann im Normalbetrieb ermittelt werden. Dabei wird die Referenzposition in einer Stellung des Trenngliedes ermittelt, bei der genug Energie im Hydrospeicher gespeichert ist, um das Walzenpaar von der Arbeitsposition in die Sicherheitsposition zu bewegen. Alternativ ist auch denkbar, dass die Referenzposition aus Daten, wie den geometrischen Werten der Walzanordnung (beispielsweise Abmessungen des ersten und zweiten Speicherraums), sowie der idealen Gasgleichung berechnet werden kann.

Die Position kann mit der Referenzposition kontinuierlich verglichen werden. Dadurch kann kontinuierlich festgestellt werden, ob die Sicherheitseinrichtung funktionsfähig ist. Auf plötzliche, aber auch schleichende Änderungen der gespeicherten Energie kann schneller reagiert werden, um die Funktionsfähigkeit wieder herzustellen.

Bei dem Verfahren für eine Sicherheitsabschaltung einer beschriebenen Walzanordnung ist im Hydrospeicher zumindest genug Energie gespeichert, um das Walzenpaar von der Arbeitsposition in die Sicherheitsposition zu bewegen, wobei bei Aktivierung der Sicherheitsabschaltung das Auslassventil in die geöffnete Position geschaltet wird, so dass hydraulische Flüssigkeit aus dem ersten Speicherraum strömt, wobei das komprimierbare Gas in dem zweiten Speicherraum entspannt, wodurch gespeicherte Energie freigesetzt wird, wodurch das Walzenpaar von der Arbeitsposition in die Sicherheitsposition bewegt wird.

### Kurzbeschreibung der Zeichnung

Eine Ausgestaltung der erfindungsgemäßen Walzanordnung wird nachfolgend anhand der Figuren näher erläutert. Diese zeigen, jeweils schematisch:
Fig. 1 ein Walzenpaar einer Walzanordnung,
Fig. 2 eine Sicherheitseinrichtung der Walzanordnung aus Figur 1.

### Ausführung der Erfindung

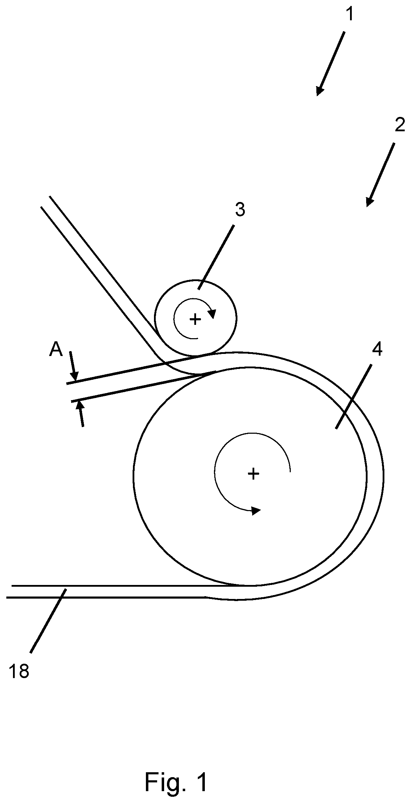

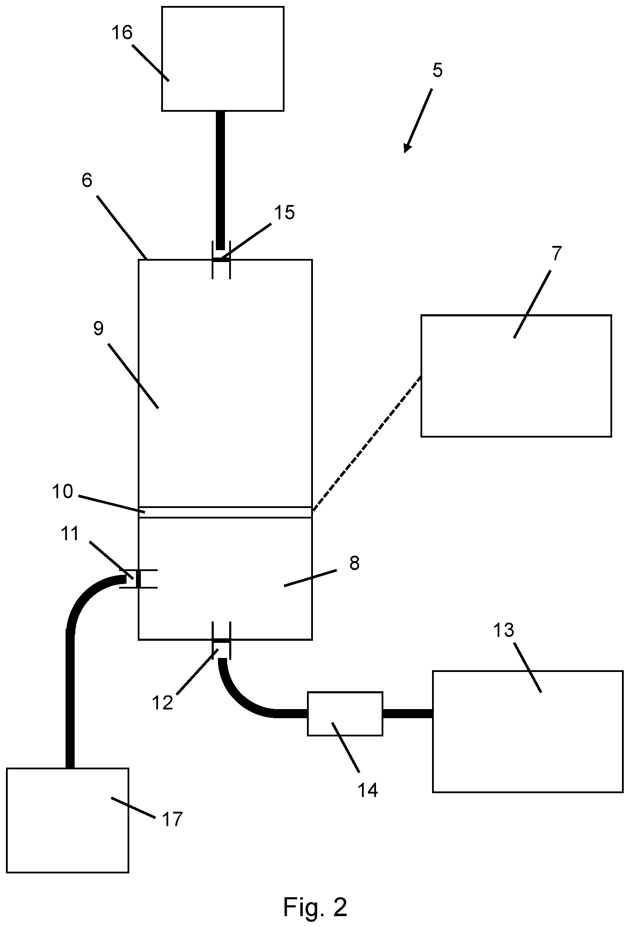

Die Figuren 1 und 2 zeigen eine Walzanordnung 1. Die Walzanordnung 1 umfasst ein Walzenpaar 2 mit zwei zusammenwirkenden Walzen 3, 4 sowie eine Sicherheitseinrichtung 5. Aus Übersichtsgründen ist in Figur 1 die Sicherheitseinrichtung 5 und in Figur 2 das Walzenpaar 2 mit zwei zusammenwirkenden Walzen 3, 4 nicht dargestellt.

Der Abstand A zwischen den Walzen 3, 4 wird über zwei Hydraulikzylinder 17 eingestellt und kann durch Verstellen des Kolbenhubs der Hydraulikzylinder 17 vergrößert oder verkleinert werden. Zum Verstellen des Hydraulikzylinders 17 wird auf einer Seite des Hydraulikzylinders 17 Hydraulikflüssigkeit eingefüllt und auf der anderen Seite entnommen. Das Fördern der Hydraulikflüssigkeit erfolgt über eine Hydropumpe (nicht dargestellt).

**Figur 1** zeigt das Walzenpaar 2 der Walzanordnung 1 mit zwei zusammenwirkenden Walzen 3, 4. Das Walzenpaar 2 weist eine Arbeitsposition und eine Sicherheitsposition auf, wobei der radiale Abstand A zwischen den Walzen 3, 4 in der Sicherheitsposition größer ist als in der Arbeitsposition. In Figur 1 ist das Walzenpaar in der Arbeitsposition dargestellt.

Die Walzanordnung 1 ist als Walzanordnung 1 für die Bearbeitung von elastomeren Werkstoffen ausgestaltet sein. Durch die Walzanordnung wird ein elastomerer Werkstoff 18 bearbeitet, der als Bahnenware ausgestaltet ist.

**Figur 2** zeigt die Sicherheitseinrichtung 5 der Walzanordnung 1. Die Sicherheitseinrichtung 5 weist einen Hydrospeicher 6 und eine Messeinrichtung 7 auf. Der Hydrospeicher 6 weist einen Speicher mit einem ersten Speicherraum 8 und einem zweiten Speicherraum 9 auf. In dem ersten Speicherraum 8 ist eine hydraulische Flüssigkeit angeordnet, wobei in dem zweiten Speicherraum 9 ein komprimierbares Gas angeordnet ist. Das komprimierbare Gas kann insbesondere Stickstoff sein. Weiterhin umfasst der Hydrospeicher 6 ein beweglich angeordnetes Trennglied 10, das den ersten Speicherraum 8 von dem zweiten Speicherraum 9 mediendicht trennt. Der Hydrospeicher 6 ist dazu eingerichtet, auf das Walzenpaar 2 einzuwirken, um das Walzenpaar 2 von der Arbeitsposition in die Sicherheitsposition zu bewegen. Die Messeinrichtung 7 ist dazu eingerichtet, kontinuierlich eine Position des Trenngliedes 10 innerhalb des Hydrospeichers 6 zu erfassen.

Der erste Speicherraum 8 kann über ein erstes Steuerventil 12 fluidisch mit einem Reservoir für Hydraulikflüssigkeit 13 verbunden werden. Das erste Steuerventil 12 ist in dem dargestellten Zustand geschlossen. Aus dem Reservoir für Hydraulikflüssigkeit 13 kann bei geöffnetem ersten Steuerventil 12 über eine Hydromaschine 14 hydraulische Flüssigkeit in den ersten Speicherraum eingebracht werden. Die Hydromaschine 14 ist eine Hydropumpe. Die Hydromaschine 14 dient der Versorgung des ersten Speicherraums mit hydraulischer Flüssigkeit.

Der zweite Speicherraum 9 kann fluidisch über ein zweites Steuerventil 15 mit einem Reservoir für komprimierbares Gas 16 verbunden sein. Dadurch kann der zweite Speicherraum 9 mit komprimierbarem Gas befüllt oder nachgefüllt werden, insbesondere bei Leckagen oder anderen Verlusten von komprimierbarem Gas. Das zweite Steuerventil 15 ist in dem dargestellten Zustand geschlossen.

Die Messeinrichtung 7 ist als mechanisches Wegmesssystem eingerichtet. Denkbar ist auch, dass die Messeinrichtung als magnetisches, elektrisches oder optisches Wegmesssystem eingerichtet ist.

Der Hydrospeicher 6 ist als Kolbenspeicher ausgebildet. Das Trennglied 10 ist als Kolben ausgebildet. Der als Kolbenspeicher ausgebildete Hydrospeicher 6 ist zylindrisch ausgestaltet. Denkbar ist auch, den Hydrospeicher 6 als Blasenspeicher oder Membranspeicher auszubilden.

Dem ersten Speicherraum 8 ist ein Auslassventil 11 zugeordnet, wobei das Auslassventil 11 zwischen einer geöffneten und einer geschlossenen Position schaltbar ist. In der dargestellten geschlossenen Position des Auslassventils 11 ist der erste Speicherraum 8 fluiddicht abgeschlossen. In geöffneter Position des Auslassventils kann die hydraulische Flüssigkeit durch das Auslassventil 11 aus dem ersten Speicherraum 8 strömen. Der erste Speicherraum 8 ist über das Auslassventil 11 mit einer Bewegungsvorrichtung in Form von Hydraulikzylindern 17 wirkverbunden. Die Hydraulikzylinder 17 sind dazu eingerichtet auf das Walzenpaar 2 einzuwirken, um zumindest eine der Walzen 3, 4 des Walzenpaares 2 zu bewegen.

Das Trennglied 10 wird durch Veränderung des Relativdrucks zwischen erstem und zweitem Speicherraum 8, 9 bewegt. Durch die Messeinrichtung 7 wird die Position des Trennglieds 10 innerhalb des Hydrospeichers 6 gemessen und mit einer vorgegebenen Referenzposition des Trennglieds 10 verglichen. Aus einer Abweichung der gemessenen Position zu der vorgegebenen Referenzposition ist die Funktionsfähigkeit der Sicherheitseinrichtung 5 feststellbar.

Die Referenzposition wird im Normalbetrieb ermittelt werden. Dabei wird die Referenzposition in einer Stellung des Trenngliedes 10 ermittelt, bei der genug Energie im Hydrospeicher 6 gespeichert ist, um das Walzenpaar 2 von der Arbeitsposition in die Sicherheitsposition zu bewegen. Alternativ ist auch denkbar, dass die Referenzposition aus Daten, wie den geometrischen Werten der Walzanordnung 1 (beispielsweise Abmessungen des ersten und zweiten Speicherraums 8, 9), sowie der idealen Gasgleichung berechnet wird.

Die Position des Trennglieds 10 wird mit der Referenzposition kontinuierlich verglichen. Dadurch wird kontinuierlich festgestellt, ob die Sicherheitseinrichtung 5 funktionsfähig ist.

Die Sicherheitseinrichtung 5 ist funktionsfähig, wenn im Hydrospeicher 6 genug Energie gespeichert ist, um das Walzenpaar 2 von der Arbeitsposition in die Sicherheitsposition zu bewegen. Bei Aktivierung einer Sicherheitsabschaltung wird das Auslassventil 11 in die geöffnete Position geschaltet, so dass hydraulische Flüssigkeit aus dem ersten Speicherraum 8 strömt. Dadurch wird das komprimierbare Gas in dem zweiten Speicherraum 9 entspannt und gespeicherte Energie wird freigesetzt, wodurch das Walzenpaar 2 von der Arbeitsposition in die Sicherheitsposition bewegt wird.

## Patentansprüche

1. Walzanordnung (1), umfassend zumindest ein Walzenpaar (2) mit zwei zusammenwirkenden Walzen (3, 4) und eine Sicherheitseinrichtung (5), wobei die Sicherheitseinrichtung (5) einen Hydrospeicher (6) und eine Messeinrichtung (7) aufweist, wobei der Hydrospeicher (6) einen Speicher mit einem ersten Speicherraum (8) und einem zweiten Speicherraum (9) aufweist, wobei in dem ersten Speicherraum (8) eine hydraulische Flüssigkeit angeordnet ist, wobei in dem zweiten Speicherraum (9) ein komprimierbares Gas angeordnet ist, wobei der Hydrospeicher (6) ein beweglich angeordnetes Trennglied (10) aufweist, das den ersten Speicherraum (8) von dem zweiten Speicherraum (9) mediendicht trennt, wobei das Walzenpaar (2) eine Arbeitsposition und eine Sicherheitsposition aufweist, wobei der radiale Abstand (A) zwischen den Walzen (3, 4) in der Sicherheitsposition größer ist als in der Arbeitsposition, wobei der Hydrospeicher (6) eingerichtet ist, auf das Walzenpaar (2) einzuwirken, um das Walzenpaar (2) von der Arbeitsposition in die Sicherheitsposition zu bewegen, **dadurch gekennzeichnet, dass** die Messeinrichtung (7) dazu eingerichtet ist, kontinuierlich eine Position des Trenngliedes (10) innerhalb des Hydrospeichers (6) zu erfassen.

2. Walzanordnung (1) nach Anspruch 1, **dadurch gekennzeichnet, dass** die Messeinrichtung (7) als mechanisches Wegmesssystem eingerichtet ist.

3. Walzanordnung (1) nach Anspruch 1 oder Anspruch 2, **dadurch gekennzeichnet, dass** der Hydrospeicher (6) als Kolbenspeicher ausgebildet ist, wobei das Trennglied (10) als Kolben ausgebildet ist.

4. Walzanordnung (1) nach Anspruch 1 oder Anspruch 2, **dadurch gekennzeichnet, dass** der Hydrospeicher (6) als Blasenspeicher ausgebildet ist, wobei das Trennglied (10) als Blase ausgebildet ist.

5. Walzanordnung (1) nach Anspruch 1 oder Anspruch 2, **dadurch gekennzeichnet, dass** der Hydrospeicher (6) als Membranspeicher ausgebildet ist, wobei das Trennglied (10) als Membran ausgebildet ist.

6. Walzanordnung (1) nach einem der Ansprüche 1 bis 5, **dadurch gekennzeichnet, dass** dem ersten Speicherraum (8) ein Auslassventil (11) zugeordnet ist, wobei das Auslassventil (11) zwischen einer geöffneten und einer geschlossenen Position schaltbar ist.

7. Walzanordnung (1) nach einem der Ansprüche 1 bis 6, ausgestaltet als Walzanordnung (1) für die Bearbeitung von elastomeren Werkstoffen.
